(19) Europäisches Patentamt
European Patent Office
Office européen des brevets

(11) **EP 1 921 864 A2**

(12) **EUROPEAN PATENT APPLICATION**

(43) Date of publication:
**14.05.2008 Bulletin 2008/20**

(51) Int Cl.:
***H04N 7/26*** (2006.01)

(21) Application number: **07254381.2**

(22) Date of filing: **06.11.2007**

| | |
|---|---|
| (84) Designated Contracting States: **AT BE BG CH CY CZ DE DK EE ES FI FR GB GR HU IE IS IT LI LT LU LV MC MT NL PL PT RO SE SI SK TR** Designated Extension States: **AL BA HR MK RS** | (71) Applicant: **Tandberg Television ASA 0607 Oslo (NO)** |
| (30) Priority: **10.11.2006 GB 0622488** | (72) Inventor: **Mitchell, Arthur Winchester, Hampshire SO22 6JA (GB)** (74) Representative: **Want, Clifford James Harrison Goddard Foote 40-43 Chancery Lane London WC2A 1JA (GB)** |

(54) **Determining resolution of encoding for a previous image compression operation**

(57) A method and apparatus for determining a previously encoded resolution of blocking of a decompressed video signal. Edges are detected in a sample of the decompressed signal and it is determined whether an edge exists at each horizontal position along each video line in turn to output a signal when an edge is detected. Picture elements are counted along a video scan line of the sample of the decompressed signal and accumulators are enabling at intervals along the video scan line corresponding to anticipated previously encoded resolutions respectively. Thus an accumulator is incremented by the signal output when an edge is detected at the at least one anticipated resolution. The contents of the accumulators is analysed to determine a likelihood that the decompressed video signal was encoded with any of the anticipated previously encoded resolutions.

Figure 2

EP 1 921 864 A2

**Description**

This invention relates to determining resolution of encoding for a previous image compression operation.

Image compression systems are now well established in the delivery and storage of media.

One of the fundamental processes for compressing video is to sub-sample an image horizontally to reduce a number of pels representing the image. This reduces high spatial frequency information as well as reducing overheads of encoding extra groups of information called macroblocks.

In modem broadcast scenarios it is common practice to encode media at one physical location and transmit it to one or possibly many other points for onward distribution. This process is referred to as contribution and distribution. This 'concatenation' of compression systems is widespread and is well known to cause a gradual decrease in the quality of the delivered media.

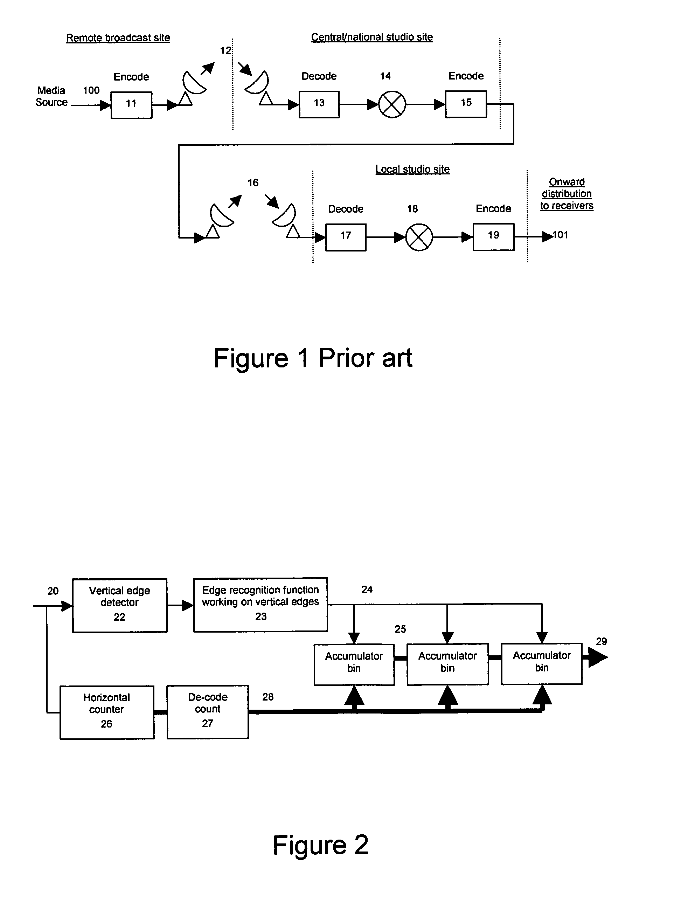

Figure 1 shows an example of a typical modem broadcast chain. The media may be encoded several times before delivery to an end point.

In this example image media from a remote site 100 is compressed by an encoder 11 for transmission 12 to a central receiving site. The compressed encoded media may be stored or decoded 13 at the central receiving site, processed 14 and re-encoded 15 for onward distribution 16. At any number of downstream sites the video may be decoded 17 and processed 18 to suit local requirements before being re-encoded 19 yet again for distribution to end viewers 101.

At early links in the chain the image is usually encoded at full resolution to maintain quality, however as the media progresses downstream a number of links involved rises and a cost associated with this rises. As a result it is common for the later stages of the chain to sub-sample the video as well as compress it more harshly.

If a step in the chain compresses the video in sub-sampled format it becomes redundant and wasteful to re-encode the video at a higher resolution downstream of this point. Since this information that the video has been sub-sampled is not carried explicitly in a data stream that carries the video, measurements must be made if the previous encoded resolution (PER) is to be obtained. Hence it is advantageous to be able to measure PER.

Knowledge of this parameter also allows a video to be processed for other reasons such as removal of block artefacts, since the PER determines the location spatially of these block edges.

It is an object of the present invention at least partially to meet this requirement in the prior art.

According to the invention there is provided a method of determining a previously encoded resolution of blocking of a decompressed video signal comprising the steps of: detecting edges in a sample of the decompressed signal; determining whether an edge exists at each horizontal position along each video line in turn; outputting a signal when an edge is detected; counting picture elements along a video scan line of the sample of the decompressed signal; enabling at least one accumulator at intervals along the video scan line corresponding to at least one anticipated previously encoded resolution respectively, such that the at least one accumulator is incremented by the signal output when an edge is detected at the at least one anticipated resolution; and analysing contents of the at least one accumulator to determine a likelihood that the decompressed video signal was encoded with any of the at least one anticipated previously encoded resolutions.

Preferably, the step of detecting edges comprises detecting vertical edges.

Preferably, the step of detecting edges comprises using a Laplacian of Gaussian function.

Conveniently, the step of enabling at least one accumulator comprises decoding an output of the counter to trigger the at least one accumulator at respective anticipated resolutions.

Advantageously, the method comprises triggering a further accumulator when an edge is detected other than at an expected previously encoded resolution and subtracting the count of the further accumulator from each other accumulator value.

According to a second aspect of the invention, there is provided an apparatus arranged to determine a previously encoded resolution of blocking of a decompressed video signal comprising: edge detecting means arranged input a sample of the decompressed video signal and to detect edges in the sample; edge recognition means arranged to receive an input from the edge detecting means and to determine whether an edge exists at each horizontal position along each video line in turn and to output a signal when an edge is detected; counter means arranged to count picture elements along a video scan line of the sample of the decompressed signal; decoder means arranged to receive an input from the counter and to enable at least one accumulator at intervals along the video scan line corresponding to at least one anticipated previously encoded resolution respectively, such that the at least one accumulator is incremented by the signal output when an edge is detected at the at least one anticipated resolution; and analysing means arranged to analyse contents of the at least one accumulator to determine a likelihood that the decompressed video signal was encoded with any of the at least one anticipated previously encoded resolutions.

Preferably the edge detector means is arranged to detect vertical edges.

Advantageously, the edge detector means comprises a Laplacian of Gaussian filter.

Conveniently, the decoder means is arranged to decode an output of the counter to trigger the at least one accumulator at respective anticipated resolutions.

Advantageously, the apparatus comprises a further accumulator arranged to be triggered when an edge is detected other than at an expected previously encoded resolution.

Conveniently, the analysing means is arranged to subtract the count of the further accumulator from each other accumulator value.

According to a third aspect of the invention, there is provided a computer program product comprising code means for performing all the steps of the method described above when the program is run on one or more computers.

According to a fourth aspect of the invention, there is provided a computer program product as described above embodied by a computer storage medium.

The invention will now be described, by way of example, with reference to the accompanying drawings in which:

Figure 1 is a schematic drawing of a video broadcast chain in which the invention may be used; and

Figure 2 is an apparatus according to the invention arranged to determine a previously encoded resolution of a video signal.

In the Figures, like reference numbers denote like parts.

Referring to Figure 2, a system according to the invention comprises a vertical edge detector 22 having a video signal input 20. An output of the vertical edge detector 22 is input to an edge recognition module 23. An output 24 of the edge recognition module 23 is input to first inputs of three accumulators 25. The video signal is also input in parallel to a horizontal counter 26 having an output to a decoder 27. An output 28 of the decoder 27 acts as trigger inputs to the three accumulators 25. The accumulator vlauess are output 29 to allow calculation to be performed on their contents.

A video image entering at an input 20 is processed by an edge detection algorithm in the vertical edge detector 22. This can be any suitable algorithm, however an optimum choice is an algorithm chosen and tuned to seek out vertical block edges. One highly suitable filter is the Laplacian of Gaussian function.

Advantageously this filter produces separated data sets for horizontal and vertical edges, allowing vertical edges to be processed separately.

The edge recognition function or module 23 receives edge information from the edge detector 22 and produces a Boolean decision 24 whether an edge exists at each horizontal position along each video line in turn of the input video signal.

The incoming video signal is also input in parallel to the counter 26 which counts along an active part of a video line. This count is decoded by a decoder 27 such that a group of trigger signals 28 is created. These trigger signals 28 increment an array of accumulators 25 if the Boolean output 24 for the current horizontal offset indicates presence of an edge.

One or more of the accumulators 25 may be triggered at any time. The system contains a separate accumulator for each anticipated previous encoded resolution. One further accumulator is included in the system and is enabled by the decoder 27 if no other accumulator is enabled at a given offset, to count edges detected which are located at points other than those foreseen at expected resolutions.

In summary, each of the accumulators is associated with one of a number of anticipated horizontal resolutions. Each accumulator is enabled at each of the horizontal points along the line where, if the image were encoded at that resolution, a block edge might be expected to form. Since blocking edges occur at the edges of macroblocks, detecting edges at positions expected to be macroblock edges triggers an accumulator set for that expected resolution.

The additional accumulator counts a number of times that edges appear to occur at spatial locations not associated with block edges of any of the anticipated sub-sampled resolutions.

After a statistically suitable number of lines have been assessed, usually one whole image, the values in the accumulators are examined via an output path 29. The analysis is shown in formula 1.

**Formula 1 - Analysis of statistical data from the array of accumulators**

$$I = MAX_{i=1}^{i=n}\left[a(i) - \frac{a(0)}{6}\right]$$

Where,

$a$ is the array of accumulators, a(0) being the extra accumulator value of un-associated edges,

$i$ is the index into the array a(),

$MAX$ is a function that returns the index of the largest value returned by its argument,

$I$ is the returned index.

The result of this analysis produces a figure for each of the anticipated previously encoded resolutions. While it can generally be assumed that the largest number indicates block edges occurring at the most likely resolution, some degree of hysteresis needs to be applied since some source images may contain information that gives an erroneous result.

This hysteresis is generally advantageous since in real broadcast chains it is rare for the resolution to change and resolution changes never occur on a picture-by-picture basis.

By subtracting the un-associated edge count from each accumulator value, the picture activity, or the high frequency information that may be wrongly identified as edges, can be compensated for and a more reliable result obtained. While the PER can be determined based from a knowledge of which accumulator has a highest number a measure of the confidence that the decision is correct is gained from the ratio of the accumulated values, as follows.

A video signal compressed with a low quantiser, i.e. only slightly compressed, tends to have firstly more high frequency data and secondly more random noise. Both of these cause an increase in a number of false matches when seeking block edges. By subtracting the number of edges found "off grid" a common offset applied to all the counts is removed and the ratio between the counts becomes more meaningful and more immune to such noise.

In determining an indication of the PER there is thereby also provided an indication of a level confidence whether the indication is correct or whether default action should be taken. The level of confidence influences a hysteresis decision when deciding whether to change the PER choice. That is, the resolution is left unchanged unless there is a sufficient degree of certainty that a change should be made. For example, no change is made in the resolution until a distinct indication of a change has been indicated for more than one frame. Thus the ratio may be compared with a confidence threshold and the resolution remain unchanged unless the ratio exceeds the threshold. Since a change of image content may produce a rather indeterminate result, addition of such hysteresis before accepting a resolution change adds robustness to a system using the invention.

**Claims**

1. A method of determining a previously encoded resolution of blocking of a decompressed video signal comprising the steps of:

   a. detecting edges in a sample of the decompressed signal;
   b. determining whether an edge exists at each horizontal position along each video line in turn and outputting a signal when an edge is detected;
   c. counting picture elements along a video scan line of the sample of the decompressed signal;
   d. enabling at least one accumulator (25) at intervals along the video scan line corresponding to at least one anticipated previously encoded resolution respectively, such that the at least one accumulator is incremented by the signal output when an edge is detected at the at least one anticipated resolution; and
   e. analysing contents of the at least one accumulator (25) to determine a likelihood that the decompressed video signal was encoded with any of the at least one anticipated previously encoded resolutions.

2. A method as claimed in claim 1, wherein detecting edges comprises detecting vertical edges.

3. A method as claimed in claims 1 or 2, wherein detecting edges comprises using a Laplacian of Gaussian function.

4. A method as claimed in any of claims 1 to 3, wherein enabling at least one accumulator (25) comprises decoding an output of a counter (26) to trigger the at least one accumulator at respective anticipated resolutions.

5. A method as claimed in any of the preceding claims, comprising triggering a further accumulator when an edge is detected other than at an expected previously encoded resolution and subtracting the count of the further accumulator from each other accumulator value to form a normalised value.

6. A method as claimed in claim 5 comprising comparing ratios of normalised values with a predetermined confidence threshold and changing an existing determination of the previously encoded resolution only when at least one of the ratio of normalised values counts exceeds the confidence threshold.

7. A method as claimed in claim 6, comprising changing an existing determination of the previously encoded resolution only when a ratio of a highest normalised value and a next highest normalised value exceeds the confidence threshold.

8. An apparatus arranged to determine a previously encoded resolution of blocking of a decompressed video signal comprising:

   a. edge detecting means (22) arranged to input a sample of the decompressed video signal and to detect edges in the sample;
   b. edge recognition means (23) arranged to receive an input from the edge detecting means and to determine whether an edge exists at each horizontal position along each video line in turn and to output a signal when an edge is detected;
   c. a counter (26) arranged to count picture elements along a video scan line of the sample of the decompressed signal;
   d. decoder means (27) arranged to receive an input from the counter and to enable at least one accumulator at intervals along the video scan line corresponding to at least one anticipated previously encoded resolution respectively, such that the at least one accumulator (25) is incremented by the signal output when an edge is detected at the at least one anticipated resolution; and

e. analysing means (29) arranged to analyse contents of the at least one accumulator to determine a likelihood that the decompressed video signal was encoded with any of the at least one anticipated previously encoded resolutions.

9. An apparatus as claimed in claim 8, wherein the edge detector means (22) is arranged to detect vertical edges.

10. An apparatus as claimed in claims 8 or 9, wherein the edge detector means (22) comprises a Laplacian of Gaussian filter.

11. An apparatus as claimed in any of claims 8 to 10, wherein the decoder means (27) is arranged to decode an output of the counter (26) to trigger the at least one accumulator (25) at respective anticipated resolutions.

12. An apparatus as claimed in any of claims 8 to 11, comprising a further accumulator arranged to be triggered when an edge is detected other than at an expected previously encoded resolution.

13. An apparatus as claimed in claim 12, wherein the analysing means (29) is arranged to subtract the count of the further accumulator from each other accumulator value to form a normalised value for each of the other accumulators.

14. An apparatus as claimed in claim 13, further comprising comparison means for comparing a ratio of normalised values with a predetermined confidence threshold to resolve whether an existing determination of previously encoded resolution should be changed.

15. A computer program product comprising code means for performing all the steps of the method of any of claims 1 to 7 when the program is run on one or more computers.

16. A computer program product as claimed in claim 15 embodied by a computer storage medium.

Remote broadcast site

Central/national studio site

12

Media
Source

100

Encode

11

Decode

13

14

Encode

15

Local studio site

16

Decode

17

18

Encode

19

Onward
distribution
to receivers

101

## Figure 1 Prior art

20

Vertical edge
detector
22

Edge recognition function
working on vertical edges
23

24

25

Accumulator
bin

Accumulator
bin

Accumulator
bin

29

Horizontal
counter
26

De-code
count
27

28

## Figure 2